# EUROPÄISCHE PATENTSCHRIFT

(11) **EP 1 425 842 B1**
(45) Veröffentlichungstag und Bekanntmachung des Hinweises auf die Patenterteilung: **10.08.2005**
(21) Anmeldenummer: 02781093.6
(22) Anmeldetag: 11.09.2002
(51) Int. Cl.: H02K 11/04, H02K 5/22, H02P 6/12, E05F 15/16

(54) **ANTRIEBSEINHEIT MIT EINEM ELEKTROMOTOR FÜR VERSTELLEINRICHTUNGEN IN KRAFTFAHRZEUGEN**
DRIVE UNIT COMPRISING AN ELECTRIC MOTOR FOR ADJUSTING DEVICES IN MOTOR VEHICLES
UNITE D'ENTRAINEMENT COMPORTANT UN MOTEUR ELECTRIQUE, DESTINEE A DES DISPOSITIFS DE REGLAGE DE VEHICULES

(30) Priorität: 14.09.2001 DE 10147225
(43) Veröffentlichungstag der Anmeldung: 09.06.2004
(73) Patentinhaber: Brose Fahrzeugteile GmbH & Co. KG, Coburg, 96450 Coburg (DE)
(72) Erfinder: SESSELMANN, Helmut, 96523 Steinach (DE)
(74) Vertreter: Ninnemann, Detlef, Dipl.-Ing.
(86) Internationale Anmeldenummer: PCT/DE2002/003473
(87) Internationale Veröffentlichungsnummer: WO 2003/026104

(56) Entgegenhaltungen:
- DE-A- 4 019 787
- DE-A- 19 723 664
- DE-A- 19 944 915
- US-A- 5 770 902

## Beschreibung

Die Erfindung bezieht sich auf eine Antriebseinheit mit einem Elektromotor gemäß dem Oberbegriff des Anspruch 1 (siehe DE-A1-199 44915 und DE-A1-4019787).

Aus der DE 28 31 774 C2 ist ein Elektromotor mit einem Scheibenrotor bekannt, in dessen ebenem Luftspalt eine eisenlose Statorwicklung angeordnet ist, der wenigstens auf einer Seite ein permanentmagnetisierter Ring mit axial magnetisierten Segmenten und auf beiden Seiten weichmagnetische ebene Scheiben für den magnetischen Rückschluss zugeordnet sind. Koaxial zur Rotorwelle ist ein elektrodynamischer Tachogenerator so angeordnet, dass eine möglichst kompakte Einheit von Elektromotor und Tachogenerator entsteht.

Die bekannte Einheit aus Elektromotor und Tachogenerator besteht aus koaxialen, aneinander gereihten Funktionselementen des Elektromotors und des Tachogenerators, wobei jede Einheit für sich voll funktionsfähig ist, wenn die einzelnen Funktionselemente voneinander getrennt werden.
Der Einsatz wartungsfreier elektronisch kommutierter Motoren scheiterte zum einen an der bislang verfügbaren Bordnetzspannung von 12 V in Kraftfahrzeugen, da bei dieser geringen Spannung wegen der geforderten Leistung erhebliche Ströme durch die elektronische Kommutierungsschaltung bewältigt werden müssen und zum anderen an den Kosten für derartige elektronische Kommutierungsschaltungen.

Sowohl für mechanisch kommutierte Elektromotoren als auch für elektronisch kommutierte Elektromotoren für Verstelleinrichtungen in Kraftfahrzeugen ist einschüeßlich der erforderlichen Getriebeteile für die Verstelleinrichtungen ein erheblicher Platzbedarf vorzusehen, wobei wegen der stark unterschiedlichen Umgebungsbedingungen im Betrieb und der geforderten Betriebssicherheit derartiger Antriebseinheiten ein erheblicher Hersteilungsaufwand betrieben werden muß.

Aufgabe der vorliegenden Erfindung ist es, eine kompakte, leichte und kostengünstig herstell- und einsetzbare Antriebseinheit aus Elektromotor, Stromversorgungseinrichtung, Getriebe und Elektronik mit integrierter Stromversorgung, Steuerung und Regelung der Antriebseinheit sowie Steuerung und Überwachung der von der Antriebseinheit angetriebenen Verstelleinrichtung bereitzustellen.

Diese Aufgabe wird erfindungsgemäß durch die Merkmale des Anspruchs 1 gelöst.

Die erfindungsgemäße Lösung schafft eine kompakte, leichte und kostengünstig herstell- und einsetzbare Antriebseinheit aus Elektromotor, Stromversorgungseinrichtung, Getriebe und Elektronik mit integrierter Stromversorgung, Steuerung und Regelung der Antriebseinheit sowie Steuerung und Überwachung der von der Antriebseinheit angetriebenen Verstelleinrichtung. Da die Antriebseinheit alle für die Stromversorgung, Steuerung und Regelung der Antriebseinheit sowie Steuerung und Überwachung der Verstelleinrichtung erforderlichen Bauteile in einem Gehäuse zusammenfaßt, ergeben sich die Vor aussetzungen für ein synergetisches Verschmelzen von Elektronikbausteinen mit beispielsweise einer Einklemmschutzelektronik sowie von Elektronik und mechanischen Bauteilen wie das Gehäuse des Elektromotors und die Elektronikbausteine tragenden Teilen, so daß die Antriebseinheit in Verbindung mit der von ihr angetriebenen Verstelleinrichtung nach Art eines Servomotors betrieben werden kann. Durch die synergetische Vereinigung der für eine elektronische Kommultierung erforderlichen notwendigen, aber kostenerhöhenden Stromrichterschaltung mit einer Überwachungselektronik für die von der Antriebseinheit angetriebene Verstelleinrichtung ist eine kostengünstige Herstellung des Gesamtsystems möglich.

Die für unterschiedliche Aufgaben einsetzbare Vorteile können ein Mikrocontroller, ein Stecker oder Stecksystem, ein Positionserkennungssystem, eine Leiterplatte oder ein Stanzgittersystem sein. Durch die Integration der verschiedene Bauteile in das Gehäuse des Elektromotors entfällt die Notwendigkeit, zusätzliche Maßnahmen zum Schutz und ggf. zur Abschirmung elektronischer Bauteile zu treffen.

Vorzugsweise kann die Elektronik und Stromversorgungseinrichtung in den Gehäusedeckel integriert und ein Stecker oder Stecksystem zur Außenseite des Gehäusedeckels geführt werden.

Durch diese Maßnahme wird die Herstellung der kompakten Antriebseinheit erleichtert und die Montage durch die nur noch erforderliche Verbindung des Steckers oder Stecksystems mit einer Spannungsquelle und ggf. einer zentralen Steuerung und Regelung eines Kraftfahrzeugs vereinfacht.

Eine weitere Einsparung von Bauteilen ist dadurch zu erreichen, daß eine die Elektronik- und Stromversorgungs-Bausteine aufnehmende Leiterplatte als Teil des Gehäuses oder als Gehäusedeckel ausgebildet ist, insbesondere, dass die Leiterplatte Bestandteil des Gehäusedeckels ist.

Wahlweise kann die Leiterplatte in den Gehäusedeckel eingespritzt werden.

Durch die Befestigung von Elektronik- und/oder Stromversorgungsbausteinen bzw, einer Leiterplatte oder eines Stanzgittersystems an der Innenseite des Gehäusedeckels ist ein wirksamer Feuchtigkeitsschutz und Schutz vor mechanischen Beanspruchungen gegeben.

Durch Einstecken oder Einclipsen eines oder mehrerer Elektronik- bzw. Stromversorgungsbausteine in innenseitige Ausnehmungen des Gehäusedeckels ist eine einfache Montage, ein einfacher Austausch für Reparatur- und Prüfzwecke sowie eine eindeutige und übersichtliche Zuordnung mehrerer Elektronik- oder Stromversorgungsbausteine gewährleistet.

Die Steck- oder Clipsverbindung von Elektronik- oder Stromversorgungsbausteinen auf der Innenseite eines Gehäusedeckels kann mit der Anordnung von Sensorelementen kombiniert werden, die in das Gehäuseinnere gerichtet sind und durch ihre Integration beispielsweise in einen Elektronikbaustein eine klare Zuordnung und kurze Übertragungswege zur Minimierung von Störeinflüssen schaffen.

Die erfindungsgemäße Lösung eignet sich insbesondere für Antriebseinheiten für Verstelleinrichtungen mit einer Einkiemmschutzvorrichtung, d.h. beispielsweise für Fensterheber, Schiebedächer oder Sitzverstellungen, bei denen während eines Schließ- oder Verstellvorgangs die Gefahr des Einklemmens von Körperteilen oder Gegenständen besteht. Durch eine Nutzung der Elektronikbausteine sowohl für die Steuerung und Regelung der Antriebseinheit als auch für Überwachungsfunküonen einer Einklemmschutzvorrichtung können Sensorsignale, die für die elektronische Kommutierung des elektronisch kommutierten Antriebsmotors wie Positions-, Geschwindigkeits- und Beschleunigungssignale benötigt werden, auch den für die Einklemmschutzvorrichtung vorgesehenen Elektronikbausteinen zur Verfilgung gestellt und ausgewertet werden. Durch diese synergetische Vereinigung der Erfassungs- und Auswerteelektronik kann das Gesamtsystem trotz einer für die elektronische Kommutierung erforderlichen kostenerhöhenden Stromrichterschaltung kostengünstig hergestellt werden.

Der Synergieeffekt ist bereits dadurch zu erreichen, daß für die Elektronik der Antriebseinheit und die Elektronik der Einklemmschutzvorrichtung gemeinsame Sensoreinrichtungen vorgesehen sind, in besonderem Maße aber dadurch, daß die Einktemmschutzelektronik und die Elektronik für die Ansteuerung der Stromrichterschaltung zur Speisung elektronisch kommutierter Antriebsmotoren eine Einheit bilden, bei der Elektronik-Bauelements gemeinsam genutzt werden.

Vorzugsweise werden die für die Kommutierung des elektronisch kommutierten Motors erfaßten Sensorsignale wie Positions-, Geschwindigkeit- und Beschleunigungssignale an Bauelemente der Einklemmschutzvorrichtung abgegeben und von der Einklemmschutzvorrichtung ausgewertet.

Neben oder in Ergänzung zu einer synergetischen Vereinigung von Elektronikbausteinen sowohl für die Ansteuerung einer Stromrichterschaltung des elektronisch kommutierten Elektromotors als auch für dessen Einklemmschutzvorrichtung kann die gemeinschaftliche Elektronik zusätzlich die Steuerung von Aktuatoren weiterer Funktionseinheiten des Kraftfahrzeugs wie Türschloß, Lenkrad, Rückspiegel oder dergleichen übemehmen.

Weiterhin kann im Zusammenhang mit einer Memory-Einrichtung zur Einstellung der Sitzparameter, der Innen- und Außenspiegel und des Lenkrads eine Prioritätensteuerung vorgesehen werden, die entsprechend einer festgelegten Staffelung für eine zeitlich aufeinanderfolgende Abarbeitung von Einstellbefehlen sorgt. Eine solche Prioritätensteuerung ertaubt eine Reduzierung des Hardwareaufwandes, da für die Steuerung der unterschiedlichen Aktuatoren dieselben Bauelemente Verwendung finden.

Neben einer drahtgebundenen Kommunikation der Elektronik mit den Aktuatoren kann auch eine drahtlose Übertragung von Steuer- und Sensorsignalen vorgesehen werden.

Anhand von in der Zeichnung dargestellten Ausführungsbeispielen soll der der Erfindung zugrunde liegende Gedanke näher erläutert werden. Es zeigen:
- **Fig.1** -: eine perspektivische Ansicht einer Antriebseinheit mit einem elektronisch kommutierten Motor mit integrierter Elektronik, Stromrichterschaltung und Einklemmschutzvorrichtung;
- **Fig. 2** -: eine perspektivische Ansicht der für einen Seilfensterheber vorgesehenen Antriebseinheit gemäß Figur 1;
- **Fig. 3** -: eine perspektivische Ansicht der Innenseite eines Gehäusedeckels mit Elektronik- und Stromrichterbausteinen;
- **Fig. 4**-: eine Explosionsdarstellung eines elektronisch kommutierten Scheibeniäufer motors und der auf der Innenseite eines Gehäusedeckels angeordneten Elektronik- und Stromrichterbausteine entsprechend der Antriebseinheit gemäß Figur 2;
- **Fig. 5** -: eine perspektivische Ansicht der Innenseite eines Gehäusedeckels einer Antriebseinheit mit Integriertem Sensor und einer Ausnehmung zur Aufnahme eines eindipsbaren Elektronikbausteins und
- **Fig. 6** -: eine perspektivische Ansicht entsprechend Figur 5 beim Einsetzen eines Elektronikbausteins in eine Ausnehmung des Gehäusedeckels.

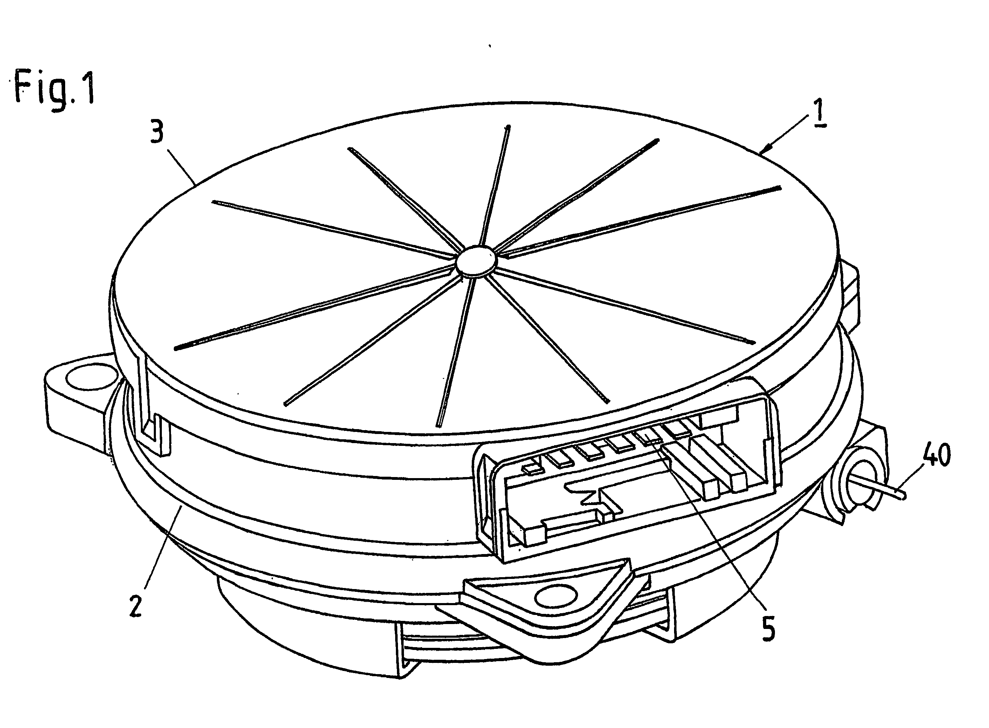

Die in den **Fig. 1 bis 4** dargestellte Antriebseinheit für einen Seilfensterheber in einem Kraftfahrzeug besteht aus mehreren Komponenten, nämlich einem Elektromotor 9, einer den Elektromotor 9 speisenden Stromversorgungseinrichtung, einem mit der Antriebswelle des Elektromotors 9 verbundenen Getriebe bzw. einem Abtrieb 4 und einer Elektronik zur Steuerung und Regelung des Elektromotors 9. Die gesamte Antriebseinheit ist in einem Gehäuse 1 des Elektromotors 9 angeordnet, das aus zwei Gehäuseschalen bzw. einem Gehäuseboden 2 und einem Gehäusedeckel 3 zusammengesetzt ist. Der Gehäuseboden 2 weist mehrere Flansche 21, 22, 23 zur Befestigung der Antriebseinheit an einer Trägerplatte, einem Türmodul oder einem Karosserieteil auf. Der vom Elektromotor 9 angetriebene Abtrieb besteht im vorliegenden Ausführungsbeispiel aus einer Seiltrommel 4, auf der ein Seil 40 aufgewickeit und in der einen oder anderen Richtung zum Heben und Senken einer Fensterscheibe des Kraftfahrzeugs bewegt wird.

Zur Verbindung der Antriebseinheit mit einer Spannungsquelle, beispielsweise mit der Bordbatterie des Kraftfahrzeugs, sowie mit Bedienungselementen wie Schaltem oder Tastern bzw. einer zentralen Steuer- und Regeleinrichtung des Kraftfahrzeugs ist ein Stecker bzw. Stecksystem 5 vorgesehen, das mehrere Kontaktzungen oder -aufnahmen aufweist, die mit einem entsprechenden Gegenstecker verbindbar sind. Der Gegenstec??ker kann in die Öffnung des Steckers oder Stecksystems 5 eingeführt und beispielsweise über eine Rastverbindung mit dem Stecker oder Stecksystem 5 verbunden werden, so daß die elektrische Verbindung mit der Bordbatterie, den Schaltem oder Tastem bzw. der zentralen Steuer- und Regelvorrichtung hergestellt ist.

Der Gehäusedeckel 3 dient zur Aufnahme der Ansteuerelektronik für den Elektromotor sowie für eine Einklemmschutzvorrichtung des Seilfensterhebers. Die Stromrichter- und Elektronikbausteine 6 bis 8 sowie weitere nicht näher bezifferte Bauelemente der Stromrichter- und Einktemmschutzetektronik sind auf einer Leiterplatte oder einem 10 montiert, die bzw. das Teil des Gehäuses 1 ist bzw. die Deckfläche des Deckels 3 bildet.

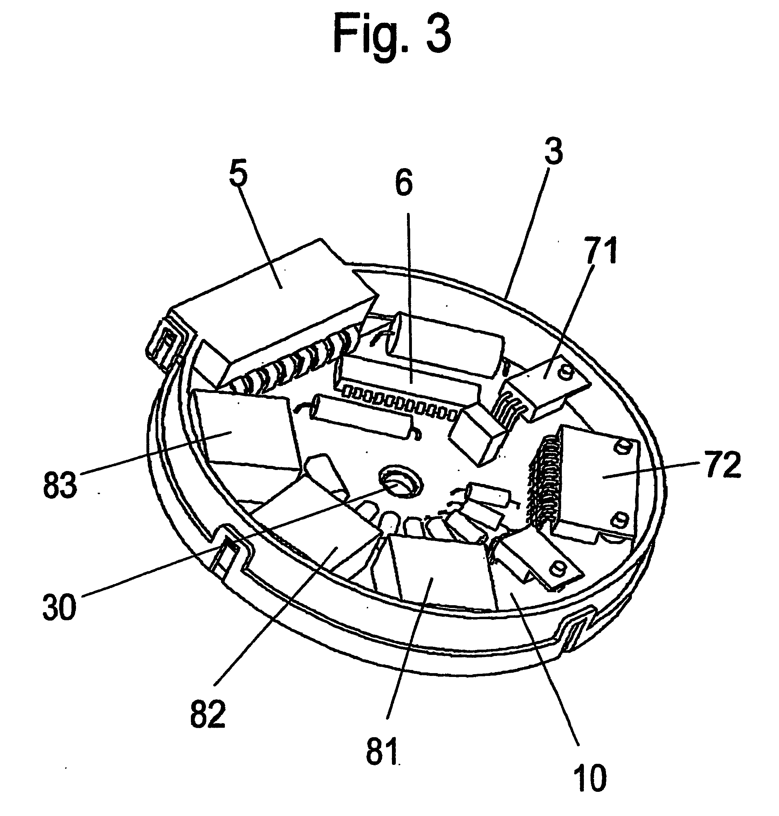

Wie der perspektivischen Darstellung der Innenseite des Deckels 3 gemäß **Fig. 3** zu entnehmen ist, sind neben dem Stecker oder Stecksystem 5 ein Mikrocontroller 6, eine Halbleiter-Endstufe 71, ein mehrere Leistungshalbleiter beispielweise in Brückenschaltung enthaltender Baustein 72 sowie anwendungsspezifische Bausteine oder aktive oder passive Bauelemente 81 bis 83 angeordnet. Eine zentrale Ausnehmung 30 dient zur Aufnahme und Lagerung der Antriebswelle des Elektromotors 9, die auf der Gegenseite mit einem Getriebe oder Abtrieb, im vorliegenden Ausführungsbeispiel mit der Seiltrommel 4, verbunden ist.

Anstelle der in **Fig. 3** dargestellten Leiterplatte 10 kann auch ein Stanzgitter in den Gehäusedeckel 3 eingespritzt bzw. durch Umspritzen mit Kunststoff als Teil des Gehäusedeckels 3 bzw. als Deckel selbst ausgebildet werden.

Der vorzugsweise als elektronisch kommutierter Motor ausgebildete Elektromotor kann aus einer Gleichstrommaschine, einer aktiven und reaktiven Reluktanzmaschine, einer Synchronmaschine, einem Lynchmotor oder dergleichen bestehen.

Die in den Gehäusedeckel 3 integrierte Stromrichter- und Einklemmschutzelektronik weist eine Mehrfachfunktion sowohl zur Steuerung und Regelung des Elektromotors als auch zur Ausbildung einer Einklemmschutzelektronik auf. Durch die Kopplung der Antriebswelle des Elektromotors 9 mit der Seiltrommel 4 eines Fensterhebers kann die Position der Fensterscheibe des Seilfensterhebers aus den Umdrehungen und der Winkelstellung des Elektromotors 9 bestimmt werden. Weiterhin ist die Verstellgeschwindigkeit der Fensterscheibe proportional zur Drehzahl des Elektromotors 9 und in gleicher Weise die Beschleunigung bzw. das Abbremsen der Fensterscheibe proportional zur Winkelbeschleunigung des Elektromotors 9. Die Positions-, Geschwindigkeits- und Beschleunigungssignale werden für die elektronische Kommutierung des elektronisch kommutierten Elektromotors 9 für dessen Magnetfeldsteuerung benötigt, wobei die Sensorsignale dem Mikrocontroller 6 zugeführt werden, der über die Halbleiterendstufe 71 die Bauelemente der Stromrichterschattung 72 ansteuert.

Die zur Regelung des Elektromotors 9 beispielsweise in Form einer Drehzahlregelung mit unterlagerter Stromregelung verwendeten Sensorsignale in Verbindung mit der Positionsbestimmung der Fensterscheibe durch Erfassen der Umdrehungen und Winkelstellung des Elektromotors 9 werden aber auch für eine Einklemmschutzregelung verwendet werden wie sie beispielsweise in der DE 196 33 415 C1 oder der WO 98140945 beschrieben ist.

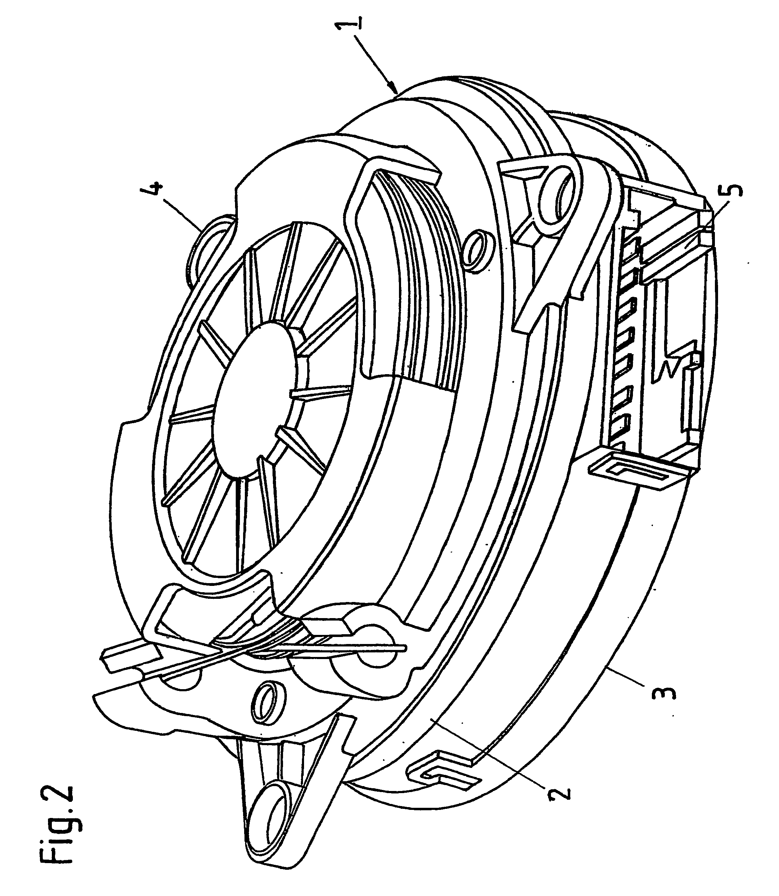

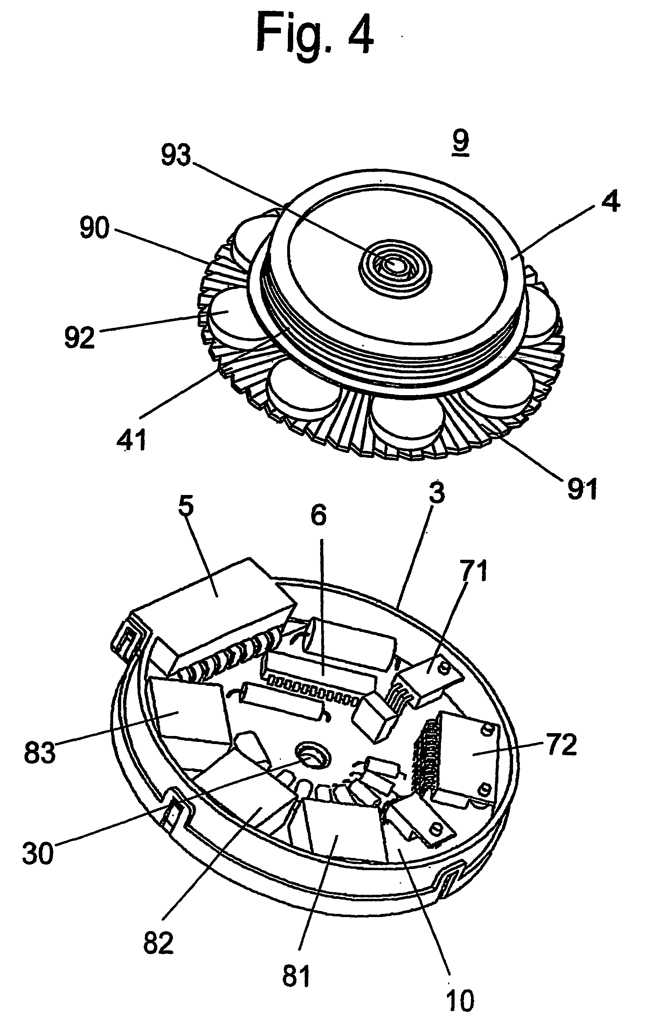

**Fig. 4** zeigt in einer Explosionsdarstellung einen elektronisch kommutierten Scheibenläufermotor und die auf der Innenseite eines Gehäusedeckels angeordnete Elektronik- und Stromrichterbausteine in einer Ansicht, die der in **Fig. 2** dargestellten Antriebseinheit entspricht. Aus dieser Darstellung geht die kompakte Bauweise unter Einbeziehung sämtlicher mechanischer, elektrischer und elektronischer Bauteile für die nach Art eines Servomotors arbeitenden Antriebseinheit hervor. In dieser Darstellung entsprechen die im Gehäusedeckel 3 integrierten Elektronikbausteine der Darstellung gemäß **Fig. 3**. Der elektronisch kommutierte Scheibenläufermotor 9 besteht aus einer mit Leiterschleifen 91 versehenen Läuferscheibe 90, die sich in einem Magnetfeld befindet, das von den Permanentmagneten 92 gebildet wird. Die Motorwelle 93 ist mit der Seiltrommel 4 mit spiralförmiger Seilführungsrille 41 als Abtrieb verbunden.

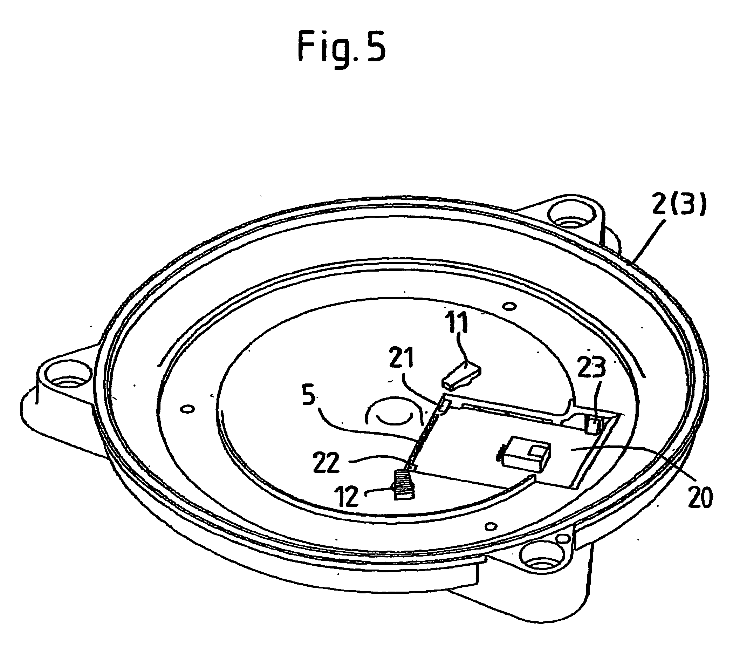

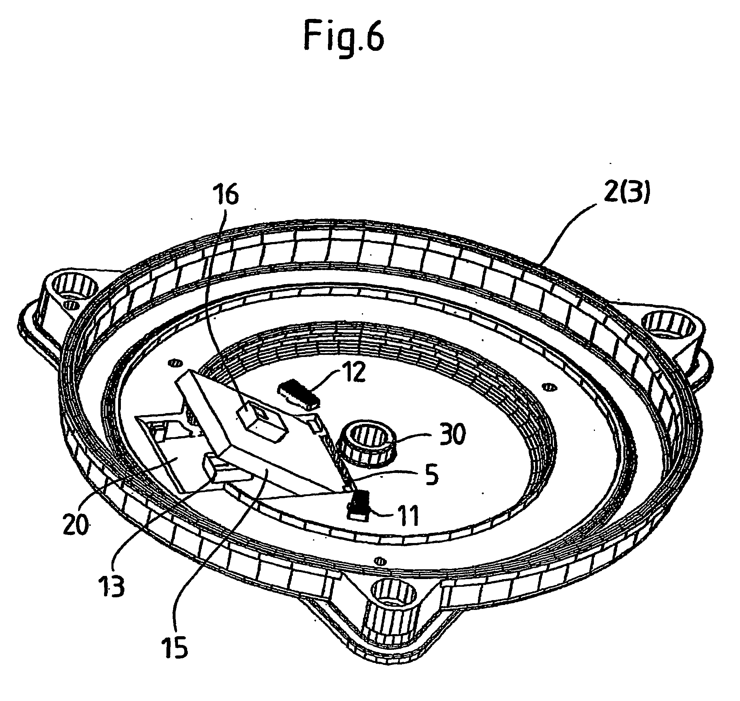

In den **Fig. 5 und 6** ist eine Variante der erfindungsgemäßen Lösung dargestellt, bei der die Ansteuerelektronik für einen Elektromotor sowie eine für die betreffende Verstelleinrichtung vorgesehene Überwachungselektronik und ggf. eine Elektronik zur Steuerung weiterer Funktionseinheiten wie beispielsweise eines Türschlosses oder eines Türspiegels in Verbindung mit einem Seilfensterheber als Verstelleinrichtung in einem Elektronikbaustein 15 gemäß **Fig. 6** zusammengefaßt und in einen Gehäuseboden 2 oder alternativ in einen Gehäusedeckel 3 integriert ist.

Zu diesem Zweck weist der Gehäuseboden 2 eine Ausnehmung 20 auf, die mit Ctipsen 21, 22, 23 zum Einsetzen und Verriegeln des Elektronikbausteins 15 und mit einem Stecker bzw. Stecksystem 5 versehen ist. In die Ausnehmung 20 ist ein Sensorelement 13, das beispielsweise als magnetischer oder optischer Sensor ausgebildet sein kann, eingesetzt. Für bürstenkommutierte Elektromotoren sind zu beiden Seiten der Ausnehmung 20 Bürsten 11, 12 vorgesehen und in der Mitte des Gehäusebodens 2 eine Auf nahme 30 für die Motorwelle des Elektromotors angeordnet.

Wie der Darstellung gemäß **Fig. 6** zu entnehmen ist, wird der Elektronikbaustein 15 in die Ausnehmung 20 so eingesetzt, daß die am Elektronikbaustein 15 vorgesehenen Kontaktelemente mit den Kontakten des Steckers oder Stecksystems 5 in Eingriff treten und damit die elektrische Verbindung zu einer Spannungsquelle, Bedienungselementen und/oder einer zentralen Steuer- und Regeleinrichtung herstellen. Weiterhin weist der Elektronikbaustein 15 eine gehäuseartige Erhebung 16 auf, die mit dem Sensorelement 13 fluchtet und bei vollständig in die Ausnehmung 20 eingesetztem Elektronikbaustein 15 das Sensorelement 13 umgibt. Alternativ kann das Sensorelement 13 unmittelbar in der Erhebung 16 am Elektronikbaustein 15 angeordnet werden.

Der Elektronikbaustein 15 läßt unterschiedliche Ausführungsformen in Abhängigkeit von **der Art des Elektromotors zu.**

In einer ersten Ausführungsfonn für bürstenkommutierte Maschinen wird über die Kontakte des Elektronikbausteins 15 und den Stecker bzw. das Stecksystem 5 eine Kontaktierung zu den Bürsten 11, 12 hergestellt und der Elektronikbaustein 15 enthält gemeinsame Bausteine zur Steuerung und Regelung des bürstenkommutierten Elektromotors und einer Einklemmschutzvorrichtung.

In einer zweiten Ausführungsform für elektronisch kommutierte Maschinen wird über die Kontakte des Elektronikbausteins 15 und den Stecker bzw. das Stecksystem 5 eine Kontaktierung zu den Leistungsschaltem und Spulen der Elektronik hergestellt, die sowohl eine Einklemmschutzschaltung beinhaltet als auch eine Schaltung zur Ansteuerung des elektronisch kommutierten Elektromotors, so daß eine sogenannte Mechatronic-Einheit" gebildet wird.

### Bezugszeichenliste

- 1: Gehäuse (Antriebseinheit)
- 2: Gehäuseboden
- 20: Ausnehmung
- 21-23: Clipse
- 3: Gehäusedeckel
- 30: Aufnahme
- 4: Seiltrommel
- 40: Seil
- 41: Seilführungsrille
- 5: Stecker / Stecksystem
- 6: Mikrocontroller
- 71: Halbleiterendstufe
- 72: Leistungshalbleiter/Bauelemente der Stromrichterschaltung
- 81-83: Anwendungsspezifische Bausteine / aktive, passive Bauelemente
- 9: Elektromotor/elektronisch kommutierter Scheibenläufermotor
- 90: Läuferscheibe
- 91: Leiterschleifen
- 92: Permanentmagnete
- 93: Motorwelle
- 10: Leiterplatte / Stanzgitter
- 11, 12: Bürsten
- 13: Sensorelement
- 15: Elektronikbaustein
- 16: Erhebung

## Patentansprüche

1. Antriebseinheit mit einem Elektromotor (9), einer den Elektromotor (9) speisenden Stromversorgungseinrichtung (5,6,15; 71-83), mindestens einem mit dem Elektromotor (9) verbundenen Getriebe und einer Elektronik (5,6,15;71-83) für Verstelleinrichtungen in kraftfahrzeugen,
**dadurch gekennzeichnet,**
**dass** die Elektronik und Stromversorgungseinrichtung (5, 6, 15; 71-83) in das Gehäuse (1) des Elektromotors (9) integriert sind und dass die Elektronik (5, 6, 15; 71-83) sowohl Steuer- und Regelfunktionen des Elektromotors (9) als auch Steuer-Regel- und Überwachungsfunktionen der Verstelleinrichtungen ausführt.

2. Antriebseinheit nach Anspruch 1, **dadurch gekennzeichnet, dass** die Elektronik und die Stromversorgungseinrichtung (5, 6, 15; 71-83) in den Gehäuseboden (2) oder Gehäusedeckel (3) integriert sind und dass ein Stecker oder Stecksystem (5) zur Außenseite des Gehäusebodens (2) oder Gehäusedeckels (3) geführt ist

3. Antriebseinheit nach Anspruch 1 oder 2, **dadurch gekennzeichnet, dass** eine die Bausteine der Elektronik und Stromversorgungseinrichtung (5, 6, 15; 71-83) aufnehmende Leiterplatte (10) als Teil des Gehäuses (1), Gehäusebodens (2) oder Gehäusedeckels (3) ausgebildet ist.

4. Antriebseinheit nach Anspruch 3, **dadurch gekennzeichnet, dass** die Leiterplatte Bestandteil des Gehäuses (1), Gehäusebodens (2) oder Gehäusedeckels (3) ist.

5. Antriebseinheit nach Anspruch 4, **dadurch gekennzeichnet, dass** die Leiterplatte in den Gehäuseboden (2) oder Gehäusedeckel (3) eingespritzt ist.

6. Antriebseinheit nach mindestens einem der voranstehenden Ansprüche, **dadurch gekennzeichnet, dass** mindestens ein Baustein der Elektronik und/oder Stromversorgungseinrichtung (5, 6, 15; 71-83) und/oder die Leiterplatte (10) an der Innenseite des Gehäusebodens (2) oder Gehäusedeckels (3) befestigt ist/sind.

7. Antriebseinheit nach Anspruch 6, **dadurch gekennzeichnet, dass** Baustein der Elektronik und/oder Stromversorgungseinrichtung (5, 6, 15; 71-83) in eine innenseitige Ausnehmung (20) des Gehäusebodens (2) oder Gehäusedeckels (3) eingesteckt oder eingeclipst ist.

8. Antriebseinheit nach mindestens einem der voranstehenden Ansprüche, **dadurch gekennzeichnet, dass** ein in das Innere des Gehäuses (1) gerichtetes Sensorelement (13) in den Baustein der Elektronik und/oder Stromversorgungseinrichtung (5, 6, 15; 71-83) integriert ist

9. Antriebseinheit nach mindestens einem der voranstehenden Ansprüche für Ver stelleinrichtungen mit einer Einktemmschutzvonichtung, **dadurch gekennzeichnet, daß** der Elektromotor (9) aus einem elektronisch kommutierten Motor besteht, der über die Elektronik und/oder Stromversorgungseinrichtung (5, 6, 15; 71-83) gespeist wird, und daß Bauelemente der Elektronik Bestandteil der Einklemmschutzvorrichtung sind.

10. Antriebseinheit nach Anspruch 9, **dadurch gekennzeichnet, daß** für die Kommutierung des elektronisch kommutierten Motors (9) erfaßte Sensorsignale wie Position, Geschwindigkeit, Beschleunigung des elektronisch kommutierten Motors (9) an Bauelemente der Einkiemmschutzvorrichtung abgegeben und von der Einklemmschutzvorrichtung ausgewertet werden.

11. Antriebseinheit nach Anspruch 9 oder 10, **dadurch gekennzeichnet, daß** der elektronisch kommutierte Motor (9) einen scheibenförmigen Permanentmagnetrotor und feststehende Erregerspulen aufweist und daß sich zumindest ein Teil der Bauteile des elektronisch kommutierten Motors (9) und des Getriebes oder Abtriebs wechselseitig abstützt oder als tragendes Bauteil zur Aufnahme oder Abstützung von Bauteilen des elektronisch kommutierten Motors (9) oder des Getriebes oder Abtriebs dient, wobei insbesondere wenigstens ein Bauteil des elektronisch kommutierten Motors (9), beispielsweise die Motorwelle (93), der magnetische Rückschluß oder die motorseitige Gehäuseschale, zusätzlich eine mechanische Funktion des Getriebes und/oder ein mechanisches Bauteil, beispielsweise die getriebeseitige Gehäuseschale, eine Funktion des elektronisch kommutierten Motors (9) oder der Elektronik und Stromversorgungseinrichtung (5, 6, 15; 71-83) übemimmt.

12. Antriebseinheit nach mindestens einem der voranstehenden Ansprüche, **dadurch gekennzeichnet, daß** die Elektronik und Stromversorgungseinrichtung (5, 6, 15; 71-83) zusätzlich die Steuerung von Aktuatoren weiterer Funktionseinheiten des Kraftfahrzeugs, wie Türschloß, Lenkrad, Rückspiegel oder dergleichen übernimmt.

13. Antriebseinheit nach Anspruch 12, **dadurch gekennzeichnet, daß** die Elektronik und Stromversorgungseinrichtung (5, 6, 15; 71-83) mit einer Prioriäten- oder Ablaufsteuerung zur vorgegebenen zeitlich aufeinander folgenden Abarbeitung von Einstell-Sollwerten versehen ist.

14. Antriebseinheit nach Anspruch 12 oder 13, **gekennzeichnet durch** eine drahtlose Verbindung zwischen der Elektronik und Stromversorgungseinrichtung (5, 6, 15; 71-83) und den Aktuatoren.

15. Antriebseinheit nach mindestens einem der voranstehenden Ansprüche, **dadurch gekennzeichnet, daß** die Elektronik und Stromversorgungseinrichtung (5, 6, 15; 71-83) einen Mikrocontroller (6) enthält und daß die Software für den Mikrocontroller (6) die Steuer-, Regel- und Überwachungsfunktionen des Elektromotors (9), der vom Elektromotor (9) angetriebenen Verstelleinrichtung und/oder weiterer Funktionseinheiten des Kraftfahrzeugs umfaßt.

## Claims

1. Drive unit with electric motor (9), a power supply device (5,6,15; 71-83) feeding the electric motor (9), at least one gearing connected to the electric motor (9) and electronics (5,6,15; 71-83) for adjusting devices in motor vehicles,
**characterised in that,**
the electronics unit and power supply device (5, 6, 15; 71-83) are integrated in the housing (1) of the electric motor (9) and that the electronics unit (5, 6, 15; 71-83) carries out both control and regulating functions of the electric motor (9) and also control, regulating and monitoring functions of the adjusting devices.

2. Drive unit according to claim 1, **characterised in that,** the electronics unit and the power supply device (5, 6, 15; 71-83) are integrated in the housing base (2) or housing cover (3) and that a plug or plug system (5) is guided to the outside of the housing base (2) or housing cover (3).

3. Drive unit according to claim 1 or 2, **characterised In that**, a conductor plate (10) holding the components of the electronics unit and power supply device (5, 6, 15; 71-83) is formed as part of the housing (1), housing base (2) or housing cover (3).

4. Drive unit according to claim 3, **characterised in that**, the conductor plate is a constituent part of the housing (1), housing base (2) or housing cover (3).

5. Drive unit according to claim 4, **characterised in that**, the conductor plate is injection moulded in the housing base (2) or housing cover (3).

6. Drive unit according to at least one of the preceding claims, **characterised in that**, at least one component of the electronics unit and/or power supply device (5, 6, 15; 71-83) and/or the conductor plate (10) is /are fixed on the inside of the housing base (2) or housing cover (3).

7. Drive unit according to claim 6, **characterised in that**, the component of the electronics and/or power supply device (5, 6, 15; 71-83) is inserted or clipped into a recess (20) on the inside of the housing base (2) or housing cover (3).

8. Drive unit according to at least one of the preceding claims, **characterised in that**, a sensor element (13) directed into the inside of the housing (1) is integrated in the component of the electronics unit and/or power supply device (5, 6, 15; 71-83)

9. Drive unit according to at least one of the preceding claims for adjusting devices with an anti jamming device, **characterised in that**, the electric motor (9) consists of an electronically commutated motor which is fed through the electronics unit and/or power supply device (5, 6, 15; 71-83) and that structural elements of the electronics unit are a constituent part of the anti jamming protection device.

10. Drive unit according to claim 9, **characterised in that**, for commutating the electronically commutated motor (9) detected sensor signals such as position, speed, acceleration of the electronically commutated motor (9) are emitted at structural elements of the anti jamming device and are evaluated by the anti jamming device.

11. Drive unit according to claim 9 or 10, **characterised in that**, the electronically commutated motor (9) has a disc like permanent magnet rotor and fixed exciter coils and that at least a part of the structural parts of the electronically commutated motor (9) and gearing or output are alternately supported or serve as supporting component part for holding or supporting component parts of the electronically commutated motor (9) or gearing or output, whereby in particular at least one component part of the electronically commutated motor (9), for example the motor shaft (93), the magnetic reflux or the housing shell on the motor side, additionally undertakes a mechanical function of the gearing and/or a mechanical component part, for example the housing shell on the gearing side, undertakes a function of the electronically commutated motor (9) or electronics unit and power supply device (5, 6, 15; 71-83) .

12. Drive unit according to at least one of the preceding claims, **characterised in that**, the electronics and power supply device (5, 6, 15; 71-83) additionally undertake the control of actuators of further function units of the motor vehicle such as door lock, steering wheel, rear mirror or the fike.,

13. Drive unit according to claim 12, **characterised in that**, the electronics unit and power supply device (5, 6, 15; 71-83) is provided with a priority or sequence control for predetermined time sequential processing of adjusting ideal values.

14. Drive unit according to claim 12 or 13, **characterised by** a wireless connection between the electronics and power supply device (5, 6, 15; 71-83) and the actuators.

15. Drive unit according to at least one of the preceding claims, **characterised in that**, the electronics and power supply device (5, 6, 15; 71-83) contains a micro controller (6) and that the software for the micro controller (6) incorporates the control, regulating and monitoring functions of the electric motor (9), the adjusting device driven by the electric motor (9) and/or further function units of the motor vehicle.

## Revendications

1. Unité d'entraînement comportant un moteur électrique (9), un dispositif d'alimentation en courant (5, 6, 15 ; 71 - 83) alimentant le moteur électrique (9), au moins une transmission reliée au moteur électrique (9) et un système électronique (5, 6, 15 ; 71 - 83) pour des dispositifs de réglage dans des véhicules,
**caractérisée en ce que**
le système électronique et le dispositif d'alimentation en courant (5, 6, 15 ; 71 - 83) sont intégrés dans le boîtier (1) du moteur électrique (9), et **en ce que** le système électronique (5, 6, 15 ; 71 - 83) réalise à la fois des fonctions de commande et de régulation du moteur électrique (9), et des fonctions de commande, de régulation et de surveillance des dispositifs de réglage.

2. Unité d'entraînement selon la revendication 1, **caractérisée en ce que** le système électronique et le dispositif d'alimentation en courant (5, 6, 15 ; 71 - 83) sont intégrés dans le fond de boîtier (2) ou dans le couvercle de boîtier (3) et **en ce qu'**une fiche ou un système à fiches (5) est guidé vers la face extérieure du fond de boîtier (2) ou du couvercle de boîtier (3).

3. Unité d'entraînement selon l'une ou l'autre des revendications 1 ou 2, **caractérisée en ce qu'**une plaque à circuits imprimés (10) recevant les composants du système électronique et du dispositif d'alimentation en courant (5, 6, 15 ; 71 - 83) est réalisée en tant que partie du boîtier (1), du fond de boîtier (2) ou du couvercle de boîtier (3).

4. Unité d'entraînement selon la revendication 3, **caractérisée en ce que** la plaque à circuits imprimés fait partie du boîtier (1), du fond de boîtier (2) ou du couvercle de boîtier (3).

5. Unité d'entraînement selon la revendication 4, **caractérisée en ce que** la plaque à circuits imprimés est injectée dans le fond de boîtier (2) ou dans le couvercle de boîtier (3).

6. Unité d'entraînement selon au moins l'une des revendications précédentes, **caractérisée en ce qu'**au moins un composant du système électronique et/ou du dispositif d'alimentation en courant (5, 6, 15 ; 71 - 83) et/ou la plaque à circuits imprimés (10) est/sont fixé(s) sur la face intérieure du fond de boîtier (2) ou du couvercle de boîtier (3).

7. Unité d'entraînement selon la revendication 6, **caractérisée en ce que** le composant du système électronique et/ou du dispositif d'alimentation en courant (5, 6, 15 ; 71 - 83) est enfiché ou clipsé dans un évidement (20) ménagé sur la face intérieure du fond de boîtier (2) ou du couvercle de boîtier (3).

8. Unité d'entraînement selon au moins l'une des revendications précédentes, **caractérisée en ce qu'**un élément capteur (13) orienté vers l'intérieur du boîtier (1) est intégré au composant du système électronique et/ou du dispositif d'alimentation en courant (5, 6, 15 ; 71 - 83).

9. Unité d'entraînement selon au moins l'une des revendications précédentes pour des dispositifs de réglage avec un dispositif anti-coincement, **caractérisée en ce que** le moteur électrique (9) est constitué par un moteur à commutation électronique qui est alimenté via le système électronique et/ou via le dispositif d'alimentation en courant (5, 6, 15 ; 71 - 83), et **en ce que** des composants du système électronique font partie du dispositif anti-coincement.

10. Unité d'entraînement selon la revendication 9, **caractérisée en ce que** pour la commutation du moteur (9) à commutation électronique, des signaux de capteurs détectés, tels que la position, la vitesse, l'accélération du moteur (9) à commutation électronique sont fournis à des composants du dispositif anti-coincement et analysés par le dispositif anti-coincement.

11. Unité d'entraînement selon l'une ou l'autre des revendications 9 et 10, **caractérisée en ce que** le moteur (9) à commutation électronique présente un rotor à aimant permanent en forme de disque et des bobines d'excitation fixes, et **en ce qu'**au moins une partie des composants du moteur (9) à commutation électronique et de la transmission ou de l'entraînement sont réciproquement soutenus ou servent de composants porteurs pour recevoir ou soutenir des composants du moteur (9) à commutation électronique ou de la transmission ou de l'entraînement, et en particulier, au moins un composant du moteur (9) à commutation électronique, par exemple l'arbre de moteur (93), le blindage magnétique ou la coque de boîtier côté moteur, assume additionnellement une fonction mécanique de la transmission, et/ou un composant mécanique, par exemple la coque de boîtier côté transmission, assume une fonction du moteur (9) à commutation électronique ou du système électronique et du dispositif d'alimentation en courant (5, 6, 15 ; 71 - 83).

12. Unité d'entraînement selon au moins des revendications précédentes, **caractérisée en ce que** le système électronique et le dispositif d'alimentation en courant (5, 6, 15 ; 71 - 83) assument additionnellement la commande d'actionneurs d'autres unités fonctionnelles du véhicule, telles que la serrure de porte, le volant de direction, le rétroviseur ou similaires.

13. Unité d'entraînement selon la revendication 12, **caractérisée en ce que** le système électronique et le dispositif d'alimentation en courant (5, 6, 15 ; 71 - 83) sont pourvus d'une commande de priorités ou de déroulement pour exécuter des valeurs de consigne de réglage de manière consécutive dans le temps et prédéterminée.

14. Unité d'entraînement selon l'une ou fautre des revendications 12 et 13, **caractérisée par** une liaison sans fil entre le système électronique et le dispositif d'alimentation en courant (5, 6, 15 ; 71 - 83) et les actionneurs.

15. Unité d'entraînement selon au moins l'une des revendications précédentes, **caractérisée en ce que** le système électronique et le dispositif d'alimentation en courant (5, 6, 15 ; 71 - 83) contiennent un microcontrôleur (6) et **en ce que** le logiciel pour le microcontrôleur (6) comprend les fonctions de commande, de régulation et de surveillance du moteur électrique (9), du dispositif entraîné par le moteur électrique (9) et/ou d'autres unités fonctionnelles du véhicule.
